# EUROPÄISCHE PATENTSCHRIFT

(11) **EP 2 110 272 B1**
(45) Veröffentlichungstag und Bekanntmachung des Hinweises auf die Patenterteilung: **04.05.2011**
(21) Anmeldenummer: 09004430.6
(22) Anmeldetag: 27.03.2009
(51) Int. Cl.: B60D 1/06, B60D 1/58, B60D 1/32

(54) **Anhängekupplung**
Tow bar
Attelage

(30) Priorität: 18.04.2008 DE 102008019713
(43) Veröffentlichungstag der Anmeldung: 21.10.2009
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Bregenzer, Michael

(56) Entgegenhaltungen:
- EP-A- 0 433 858
- DE-A1- 10 334 000
- DE-U1- 20 116 706
- US-A1- 2005 230 932
- US-B2- 6 956 468
- US-B2- 7 309 076

## Beschreibung

Die Erfindung betrifft eine Anhängekupplung für ein Zugfahrzeug, insbesondere ein Personen-Kraftfahrzeug, zum Anhängen eines Anhängers an das Zugfahrzeug, mit einem Kugelkopf, der an einem freien Ende eines Kugelträgers angeordnet ist und auf die eine Kupplungsaufnahme einer Anhänger-Kupplung des Anhängers aufsetzbar ist, und mit einem Drehlager zur drehbaren Lagerung des Kugelkopfs bezüglich des Zugfahrzeugs.

Eine derartige Anhängekupplung ist beispielsweise aus der DE 103 34 000 A1 bekannt. Der Kugelkopf ist an einem Kugelträger drehbar gelagert, beispielsweise mittels eines Rollenlagers. Dadurch ist ein Schwenken des Anhängers um eine Hochachse möglich. Dies wirkt sich negativ auf die Fahreigenschaften des Gespanns bestehend aus Zugfahrzeug und Anhänger aus, da der Anhänger drehbar an der Anhängekupplung hängt. Bei höheren Geschwindigkeiten sind Instabilitäten zu befürchten. Bei starren Anhängekupplungen, d.h. ohne drehbaren Kugelkopf, sind sogar zur Vermeidung derartiger Instabilitäten Reibbakken bekannt, die am Kugelkopf entlang reiben, siehe z.B. die DE-U-20116706.

Es ist daher die Aufgabe der vorliegenden Erfindung, die Fahrstabilität bei einer Anhängekupplung der obigen Art zu verbessern.

Zur Lösung der Aufgabe ist bei einer Anhängekupplung der eingangs genannten Art vorgesehen, dass sie eine Bremseinrichtung zum Bremsen einer Drehung des Kugelkopfs bezüglich des Zugfahrzeugs aufweist.

Der erfindungsgemäße Ansatz ist, dass der Kugelkopf zwar drehen kann, die Bremseinrichtung die Drehung aber zumindest bremst, in manchen Fahrsituationen vorzugsweise sogar blokkiert. Dadurch ist es möglich, das Gespann auch bei höheren Geschwindigkeiten zu stabilisieren. Das Drehlager ermöglicht zweckmäßigerweise einen Drehfreiheitsgrad bezüglich einer Hochachse, wobei auch ein Drehfreiheitsgrad bezüglich einer horizontal verlaufenden Achse vorteilhaft mittels einer Bremseinrichtung gemäß der Erfindung bremsbar ist.

Vorzugsweise ist der Kugelkopf mit dem Kugelträger fest verbunden. Der Kugelträger wiederum ist mittels des Drehlagers an einem mit dem Zugfahrzeug fest verbindbaren oder verbundenen Kupplungsarm um eine Hochachse des Zugfahrzeugs drehbar gelagert. Diese Ausführungsform ließe sich im Prinzip auch ohne die oben genannte Bremseinrichtung realisieren. Im Unterschied zu der Drehlagerung gemäß DE 103 34 000 A1 ist das Drehlager abseits des Kugelkopfes, nämlich zwischen Kupplungsarm und Kugelträger, so dass die Ausgestaltung des Drehlagers optimiert werden kann. Insbesondere ist eine Abdichtung des Drehlagers gegen Umwelteinflüsse leichter realisierbar, wenn nicht der verhältnismäßig knapp bemessene, schwer zugängliche Einbauraum unter der Kupplungskugel für Dichtmaßnahmen zur Verfügung steht.

Eine weitere vorteilhafte Ausgestaltung der Erfindung sieht vor, dass die Anhängekupplung eine Sensoreinrichtung zur Erfassung einer Drehwinkellage des Anhängers bezüglich des Zugfahrzeugs aufweist, wobei die Sensoreinrichtung einen fahrzeugfest angeordneten Drehwinkelsensor zur Zusammenwirkung mit einem Drehwinkelgeber, z.B. einem Permanentmagneten, umfasst, der bezüglich des Kugelkopf drehfest ist. Die Sensoreinrichtung kann selbstverständlich auch mehrere Drehwinkelsensoren, z.B. magnetische Sensoren, optische Sensoren oder dergleichen, umfassen.

Der Drehwinkelgeber ist zweckmäßigerweise an dem Kugelträger oder dem Kugelkopf angeordnet, je nach dem welches der beiden Bauteile drehbar bezüglich des Zugfahrzeugs bzw. des Kupplungsarms ist. Es versteht sich, dass auch mehrere Drehwinkelgeber vorgesehen sein können. Der oder die Drehwinkelgeber können auch am Anhänger, vorzugsweise an der Anhänger-Kupplung angeordnet sein. Beispielsweise ist es möglich, einen oder mehrere Permanentmagnete an einer Kupplungspfanne der Anhänger-Kupplung anzubringen.

Der Drehwinkelsensor umfasst zweckmäßigerweise mindestens einen Magnetsensor, während der Drehwinkelgeber mindestens einen Permanentmagneten umfasst. Vorzugsweise ist der mindestens eine Drehwinkelsensor ein magnetoresistiver Sensor, z.B. ein AMR oder GMR Sensor. Bevorzugt ist ein winkelabhängiger Sensor. Es können auch mehrere Sensoren vorgesehen sein, insbesondere um einen Drehwinkel an verschiedenen Stellen zu erfassen.

Der Drehwinkelsensor ist vorzugsweise an dem den Kugelkopf haltenden Kupplungsarm angeordnet. Der Kupplungsarm ist fahrzeugfest, während der Kugelkopf relativ zu diesem Drehlager drehbar ist.

Der Drehwinkelgeber ist vorzugsweise an dem Kugelträger oberhalb des Drehwinkelsensors angeordnet. Somit befindet sich der Drehwinkelsensor unterhalb des Kugelträgers. Ein Magnetfeld des Drehwinkelgebers verläuft zweckmäßigerweise quer zur Hochachse, vorteilhaft horizontal, im Bereich des mindestens einen Drehwinkelsensors.

Vorteilhaft ist es, den Drehwinkelgeber an oder in einem vorzugsweise nicht magnetischen Bereich des Kugelträgers oder des Kupplungskugel anzuordnen, z.B. in Aluminium oder Kunststoff. Selbstverständlich ist es auch bei dem Drehwinkelsensor vorteilhaft, diesen in einem nicht magnetischen Bereich anzuordnen. Es hat sich aber in der Praxis gezeigt, dass durch entsprechende Kalibrierung auch eine Unterbringung in magnetischen Material möglich ist.

Der Drehwinkelgeber und/oder der Dreiwinkelsensor sind vorzugsweise gegen Umwelteinflüsse geschützt. In der Praxis ist beispielsweise ein Gehäuse, ein Eingießen der betreffenden Bauteile oder dergleichen vorteilhaft. Es können auch Schutzaufnahmen für den Drehwinkelgeber oder den Drehwinkelsensor beispielsweise am Kugelträger, Kupplungsarm oder Kugelkopf vorgesehen sein, in denen das jeweilige Bauteil geschützt unterbringbar ist. Das vorgenannte Gehäuse hat z.B. zwei zueinander relativ drehbewegliche Gehäuseteile, von denen eines fahrzeugfest und das andere drehfest mit dem Kugelkopf oder dem Kugelträger verbunden ist. Zwischen den beiden Gehäuseteilen ist zweckmäßigerweise eine Dichtung, zumindest eine Labyrinthdichtung vorgesehen.

Die Sensoreinrichtung hat vorzugsweise eine Kommunikationsschnittstelle für ein Kommunikationsnetz des Zugfahrzeugs, beispielsweise ein Bus-Schnittstelle. Somit kann die Sensoreinrichtung auf dem Kommunikationsnetz, beispielsweise einem CAN-Bus, einem FlexRay-Bus oder dergleichen, Drehwinkelinformationen versenden, die sie anhand des Drehwinkelgebers erfasst.

Ein weiterer, an sich bei jeder Sensoreinrichtung für eine Anhängekupplung, die einen Drehwinkel erfassen kann, sinnvolle Maßnahme ist, dass die Sensoreinrichtung zur Ermittlung einer Basiswinkellage des Kugelkopfs oder der Anhänger-Kupplung relativ zum Kupplungsarm, d.h. relativ zum Zugfahrzeug, Fahrinformationen über einen Fahrzustand des Zugfahrzeugs auf dem Kommunikationsnetz empfängt und auswertet. Dieser Fahrzustand ist zweckmäßigerweise eine Information über eine Fahrtrichtung. Beispielsweise enthält die Fahrinformation über den Fahrzustand Drehzahlinformationen von Drehzahlgebern des Zugsfahrzeugs, so dass die Sensoreinrichtung anhand dieser Drehzahlinformationen eine Geradeausfahrt, eine Kurvenfahrt, eine Vorwärtsfahrt oder eine Rückwärtsfahrt ermitteln kann. So ist es beispielsweise möglich, dass die Sensoreinrichtung bei einer Geradeaus-Vorwärtsfahrt ein jeweiliges Drehwinkelsignal des Drehwinkelsensors als eine Basiswinkelinformation ermittelt. Es versteht sich, dass die Fahrinformationen auch sozusagen aufbereitete Fahrinformationen sein können, beispielsweise von einer elektronischen Fahrstabilisierung, von einem Antiblockiersystem oder dergleichen, aufbereitete Fahrinformationen. Auch Fahrinformationen eines an das Kommunikationsnetz angeschlossenen Drehwinkelsensors können von der Sensoreinrichtung ausgewertet werden.

Die Sensoreinrichtung ist zweckmäßigerweise zu einer Kommunikation mit einer elektronischen Fahrstabilisierungseinrichtung des Zugfahrzeugs ausgestaltet. Dazu hat die Sensoreinrichtung beispielsweise einen entsprechenden Kommunikationscontroller. Somit kann die Sensoreinrichtung beispielsweise Fahrinformationen über den Fahrzustand des Zugsfahrzeugs von dieser Fahrstabilisierungseinrichtung erhalten und umgekehrt die Drehwinkelinformationen an die Fahrstabilisierungseinrichtung senden.

Bei der Bremseinrichtung sind verschiedenartige mechanische Ausgestaltungen möglich. Beispielsweise enthält die Bremseinrichtung eine Reibbremse, eine piezo-elektrische Bremseinrichtung oder dergleichen.

Vorzugsweise wirkt die Bremseinrichtung auf den Kugelkopf oder den Kugelträger. Es ist aber auch möglich, dass die Bremseinrichtung auf das Drehlager wirkt, beispielsweise Druck auf das Drehlager auswirkt, so dass das Drehlager leichter oder schwerer dreht.

Eine Bremskraft der Bremseinrichtung ist vorzugsweise einstellbar. Dazu hat die Bremseinrichtung vorzugsweise einen Stelleingang. Beispielsweise hat die Bremseinrichtung einen elektrischen Stellantrieb, z.B. einen elektromagnetischen Antrieb, zum Einstellen der Bremskraft. Vorzugsweise ist eine Steuereinrichtung zu einer Veränderung der Bremskraft der Bremseinrichtung in Abhängigkeit von einem oder mehreren der nachfolgenden Parameter vorgesehen:
- Fahrtrichtung
- Fahrgeschwindigkeit
- Drehwinkelgeschwindigkeit eines Drehwinkels des Anhängers relativ zu dem Zugfahrzeug.

Somit kann die Steuereinrichtung beispielsweise bei langsamer Fahrt oder Rückwärtsfahrt eine kleine Bremskraft einstellen, was die Beweglichkeit des Gespanns verbessert, während bei schneller Fahrt, insbesondere schneller Vorwärtsfahrt, eine hohe Bremskraft zweckmäßig ist. Selbstverständlich ist es möglich, dass die Steuereinrichtung eine Regelung zur Regelung der Bremskraft aufweisen kann.

Die Steuereinrichtung für die Bremseinrichtung hat zweckmäßigerweise eine Kommunikationsschnittstelle für ein Kommunikationsnetz des Zugfahrzeugs, beispielsweise einen CAN-Bus, FlexRay-Bus oder vorzugsweise einen sonstigen Fahrzeug-Bus.

Die Steuereinrichtung bildet zweckmäßigerweise einen Bestandteil der vorgenannten Sensoreinrichtung. Es ist auch möglich, dass die Steuereinrichtung einen Bestandteil der Bremseinrichtung bildet. Weiterhin ist es vorteilhaft, dass die Sensoreinrichtung oder die Bremseinrichtung die Steuereinrichtung umfassen. Jedenfalls ist es vorteilhaft, wenn die Bremseinrichtung und die Steuereinrichtung, die Sensoreinrichtung und die Steuereinrichtung, oder alle vorgenannten Einrichtungen jeweils durch ein einziges Bauteil integriert gebildet sind. So können beispielsweise die Sensoreinrichtung und die Bremseinrichtung eine Baueinheit bilden, z.B. durch einen integrierten elektronischen Baustein gebildet sein. Der Baustein ist beispielsweise ein ASIC (= Application Specific Integrated Circuit).

An dem Kugelkopf und dem Kugelträger ist zweckmäßigerweise mindestens eine Formschlusskontur zu einer horizontal drehfesten Zusammenwirkung mit einer Gegen-Formschlusskontur der Anhänger-Kupplung angeordnet. Somit ist es möglich, eine Drehbewegung des Anhängers auf den Kugelkopf oder den Kugelträger zu übertragen. Dies ist im Hinblick auf die erfindungsgemäße Bremseinrichtung vorteilhaft, die so eine optimale Bremswirkung letztlich auf den Anhänger bewirken kann. Aber auch bei der Sensoreinrichtung, selbst wenn keine Bremseinrichtung vorhanden ist, ist es vorteilhaft, eine formschlüssige Drehmitnahme zwischen einerseits dem Kugelkopf und andererseits dem Anhänger zu schaffen. Somit ist nämlich eine definierte Lage des Drehwinkelgebers, der mit dem Anhänger dreht und dem fahrzeugfesten Drehwinkelsensor möglich. Es verseht sich, dass anstelle des Formschlusses auch ein Reibschluss denkbar ist.

Die Formschlusskontur umfasst zweckmäßigerweise mindestens eine Aufnahme, z.B. eine Nut, in die ein Vorsprung der Anhänger-Kupplung eingreifen kann. Somit ist es möglich, auch konventionelle Anhänger-Kupplungen zu verwenden, die keinen Vorsprung haben. Die Formschlusskontur-Aufnahme ist dann nicht im Weg.

Zur Erleichterung eines Einführens der Gegen-Formschlusskontur in die zugfahrzeugseitige Formschlusskontur ist es vorteilhaft, wenn mindestens einen Einführschräge zum Einführen der Gegen-Formschlusskontur vorgesehen ist. Zweckmäßigerweise ist die Einführschräge und/oder ein erweiterter Bereich der Formschlusskontur so bemessen, dass ein Drehspiel von 10° bis 20°, vorzugsweise etwa 15° des Anhängers bezüglich der Kupplung bzw. des Kugelkopfes möglich ist. Das Einführen wird dadurch besonders einfach. Der erweiterte Bereich der Formschlusskontur ist zweckmäßigerweise an einer Oberseite des Kugelkopfes angeordnet, was das Einführen erleichtert.

Die mindestens eine Formschlusskontur lässt vorzugsweise eine Drehbewegung des Anhängers bezüglich des Kugelkopf bezüglich einer Horizontalebene zu, während bezüglich einer Drehung um eine Hochachse eine Drehfestigkeit gegeben ist. Somit ist beispielsweise beim Überfahren einer Kuppe oder Senke ein Drehspiel möglich, während die erfindungsgemäße Formschluss-Drehmitnahme bei einer Kurvenfahrt wirksam ist. Die mindestens eine Formschlusskontur ist zweckmäßigerweise an einer vertikalen Seitenfläche des Kugelkopfes angeordnet. Die Formschlusskontur hat zweckmäßigerweise einen im Wesentlichen vertikalen Verlauf. Beispielsweise erstreckt sich die Formschlusskontur von einer freien Oberseite des Kugelkopfs zur Unterseite des Kugelkopfs.

Vorzugsweise sind mehrere Formschlusskonturen am Kugelkopf vorgesehen, die zueinander bezüglich der Fahrzeug-Hochachse drehwinkelversetzt sind. Besonders vorteilhaft ist es, an einander entgesetzten Vertikalseiten des Kugelkopf Formschlusskonturen vorzusehen. Somit ist es beispielsweise möglich, die Gegen-Formschlusskontur wahlweise in die eine oder andere Formschlusskontur einzuführen. Es versteht sich, dass auch mehrere Gegen-Formschlusskonturen an der Anhänger-Kupplung vorgesehen sein können. Auch dann ist es vorteilhaft, wenn am Kugelkopf mehrere Formschlusskonturen für diese Gegen-Formschlusskonturen vorgesehen sind.

Der Kupplungsarm besteht vorzugsweise aus einem gebogenen Flachmaterial.

Ein weiterer Aspekt der Erfindung betrifft eine Anhänger-Kupplung für eine Anhänger zum Ankuppeln an die erfindungsgemäße Anhängekupplung. Diese Anhänger-Kupplung hat mindestens eine Gegen-Formschlusskontur, die mit der oder den am Kugelkopf oder Kugelträger angeordneten Formschlusskonturen in Eingriff bringbar ist.

Nachfolgend werden Ausführungsbeispiele der Erfindung anhand der Zeichnung erläutert. Es zeigen:
- Figur 1: eine Draufsicht auf ein erfindungsgemäßes erstes Ausführungsbeispiel eines erfindungsgemäßen Anhän- gekupplungssystems mit einem schematisch darge- stellten Zugfahrzeug,
- Figur 2: eine Schnittdarstellung des Anhängekupplungssystems gemäß Figur 1 etwa entlang einer Linie A-A in Figur 1,
- Figur 3: eine Draufsicht auf eine Anhängekupplung des Anhän- gekupplungssystems gemäß Figur 1,
- Figur 4: ein zweites Ausführungsbeispiel einer erfindungsge- mäßen Anhängekupplung im seitlichen Querschnitt,
- Figur 5: eine Vorderansicht eines dritten Ausführungsbei- spiels einer Anhängekupplung mit einem Drehwinkel- sensor im Kugelkopf,
- Figur 6: eine Querschnittsansicht der Anhängekupplung gemäß Figur 5 entlang einer Linie B-B in Figur 5 und
- Figur 7: eine Querschnittsansicht des Kugelkopf der Anhänge$- kupplung gemäß Figuren 5, 6 entlang einer Schnitt- linie C-C in Figur 6.

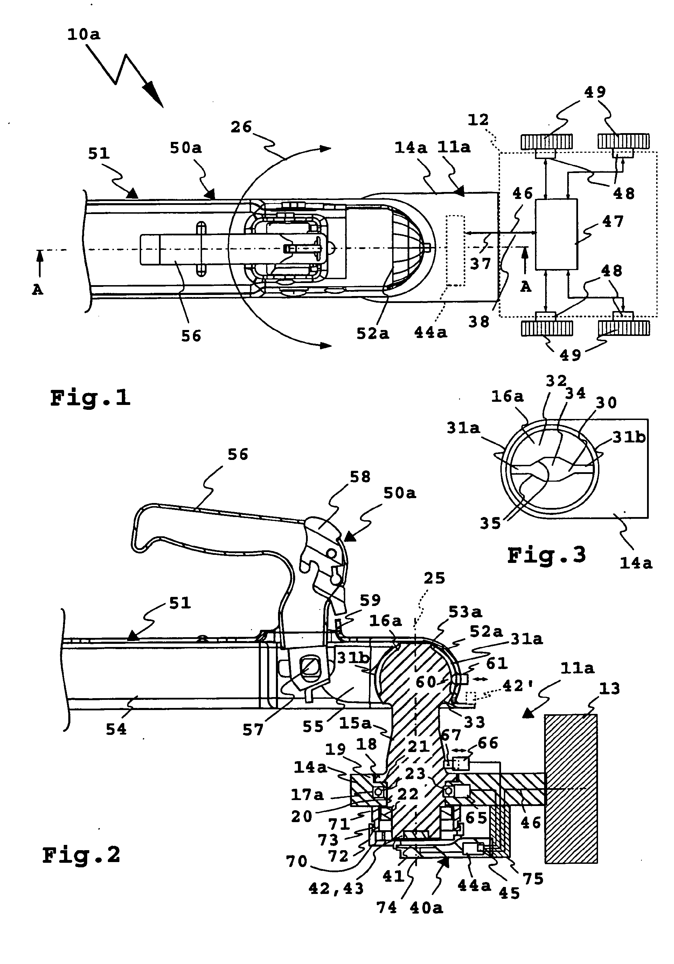

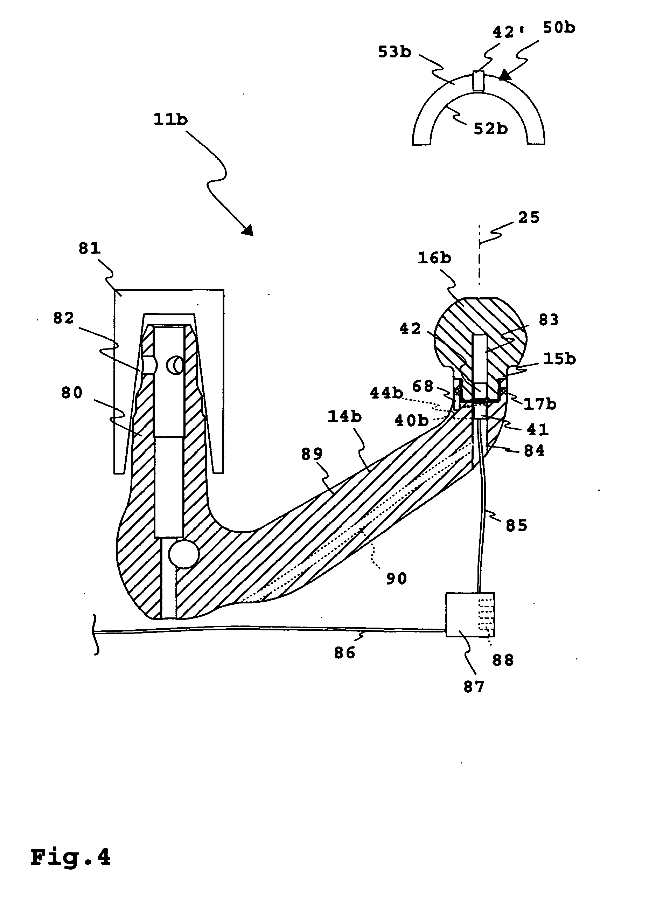

Bei einem Anhängekupplungssystem 10 gemäß Figuren 1, 2 und 3 ist eine Anhängekupplung 11a ah einem Zugfahrzeug 12 angeordnet, beispielsweise an einem Querträger 13, der sich im Heckbereich einer schematisch dargestellten Karosserie des Zugfahrzeugs 12 erstreckt. Der Querträger 13 trägt einen Kupplungsarm 14a. Der Kupplungsarm 14a ist vorliegend fest mit dem Querträger 13 verbunden. Es wäre prinzipiell auch möglich, einen Kupplungsarm 14a einer erfindungsgemäßen Anhängekupplung 11a lösbar, beispielsweise steckbar, auszugestalten, was später im Zusammenhang mit Figur 4 noch erläutert wird.

Auch eine bewegliche Lagerung, insbesondere eine schwenkbewegliche und/oder schiebebewegliche Lagerung, des Kupplungsarms bezüglich des jeweiligen Zugfahrzeugs ist bei einer erfindungsgemäßen Anhängekupplung möglich.

An dem Kupplungsarm 14a ist ein Kugelträger 15a, an dessen oberem, freien Ende ein Kugelkopf 16a angeordnet ist, mittels eines Drehlagers 17a drehbar gelagert. Der Kugelträger 15a und der Kugelkopf 16a sind vorzugsweise einstückig, beispielsweise als ein Gussteil, Schmiedeteil oder dergleichen, ausgeführt. Jedenfalls ist eine feste Verbindung zwischen Kugelkopf 16a und Kugelträger 15a vorhanden.

Das Drehlager 17a umfasst einen Stützflansch 18 am Kugelträger 15a, der in einer Ausnehmung 19 an der Oberseite des Kupplungsarms 14a drehbar aufgenommen ist. Der Stützflansch 18 steht vor einem zylindrischen Lagerabschnitt 20 des Kugelträgers 15a nach radial außen vor und stützt sich in der Ausnehmung 19, die einen größeren Durchmesser als eine den Lagerabschnitt 20 des Kugelträgers 15a aufnehmende Drehaufnahme 21 hat, ab. Somit kann die Ausnehmung 19 Vertikalkräfte ohne Weiteres aufnehmen, während der Lagerabschnitt 20 im Wesentlichen horizontale Kräfte aufnimmt.

Der Kugelträger 15a ist mit einer Sicherungsmutter 22, die sich an der Unterseite des Kupplungsarms 14a abstützt, unverlierbar am Kupplungsarm 14a befestigt. Die Sicherungsmutter 22 ist auf einen Schraubabschnitt unterhalb des Lagerabschnitts 20 des Kugelträgers 15a aufgeschraubt.

Die Lagereigenschaften des Drehlagers 17a können selbstverständlich durch Kugellager, Wälzlager, Rollenlager, Gleitlager oder dergleichen verbessert sein. Beispielhaft ist ein Kugellager 23 eingezeichnet.

An die Anhängekupplung 11a ist eine Anhänger-Kupplung 50a eines Anhängers 51 ankuppelbar. Der Kugelkopf 16a ist dann in einer Kugelaufnahme 52a eines Gehäuses 53a der Anhänger-Kupplung 50a aufgenommen. Die Anhänger-Kupplung 50a ist beispielsweise am vorderen, freien Ende einer Deichsel 54 des Anhängers 51 angeordnet. Eine Klemmbacke 55, die mit Hilfe eines Betätigungshebels 56 zwischen einer in Figur 2 dargestellten Schließstellung, bei der der Kugelkopf 16a durch die Klemmbacke 55 in der Kugelaufnahme 52a gehalten wird, und einer nach unten um eine Achse 57 geschwenkten Freigabestellung schwenkbar. Dies ist an sich bekannt. Eine Sicherungsklinke 58, die mit einem Anschlag 59 am Gehäuse 53a zusammenwirkt, sichert den Betätigungshebel 56 ist der Schließstellung, so dass sich die Anhänger-Kupplung 50a nicht unbeabsichtigt vom Kugelkopf 16a lösen kann.

Der Kugelträger 15a und somit der mit diesem fest verbundene Kugelkopf 16a ist anhand des Drehlagers 17a um eine Hochachse 25 bezüglich des Kupplungsarms 14a und somit bezüglich des Zugfahrzeugs 12 drehbar, was durch einen Pfeil 26 angedeutet ist. Diese Drehbarkeit ist insbesondere beim Rangieren, z.B. beim Rückwärtsfahren, des Gespanns bestehend aus Zugfahrzeug 12 und Anhänger 51 vorteilhaft.

Eine vorteilhafte Maßnahme sieht vor, dass der Anhänger 51 bezüglich des Kugelkopfes 16a drehfest ist. Dazu sind am Kugelkopf 16a Formschlusskonturen 30 vorgesehen, die mit Gegen-Formschlusskonturen 60 der Anhänger-Kupplung 50a zusammenwirken. Die Gegen-Formschlusskontur 60 ist an der Vorderseite eines Stifts 61 vorgesehen, der in den Innenraum der Kugelaufnahme 52a vorsteht. Der Stift 61 ist bezüglich des Gehäuses 53a beweglich gelagert, beispielsweise in Richtung eines in Figur 2 eingezeichneten Doppelpfeils. Dadurch ist es möglich, die Anhänger-Kupplung 50a auch an konventionellen, nicht erfindungsgemäßen Anhängekupplungen anzukuppeln. Jedenfalls greift der Stift 61 in die Formschlusskontur 30 ein und bewirkt eine Drehmitnahme. Eine erfindungsgemäße Gegen-Formschlusskontur, beispielsweise die Gegen-Formschlusskontur 60, erstreckt sich zweckmäßigerweise in Längsrichtung eines jeweiligen Anhängers, beispielsweise des Anhängers 51. Der Stift 61 ist beispielsweise an einer freien Stirnseite des Gehäuses 53a angeordnet.

Die Formschlusskonturen 30 umfassen Nuten 31a, 31b, deren Innenbreite mit der Außenbreite des Stifts 61 bzw. des vorderen Endes des Stifts 61 korrespondiert. Die beiden Nuten 31a, 31b erstrecken sich von einer Oberseite 32 des Kugelkopfs 16a nach unten zu dessen Unterseite. Vorzugsweise verbleibt jedoch am unteren Randbereich des Kugelkopfs 16a ein bundartiger Rand 33, was den Halt in der Kugelaufnahme 52a verbessert. An der Oberseite 32 des Kugelkopf 16a ist ferner ein erweiteter Einführabschnitt 34 vorgesehen, der sich zwischen den beiden Nuten 31a, 31b erstreckt. Ein Einführen des Stifts 61 in diesen Einführabschnitt 34 ist dadurch erleichtert, dass dieser breiter als die beiden Nuten 31a, 31b ist. Durch den erweiterten Einführabschnitt 34 ist es möglich, dass der Anhänger 51 beispielsweise in einem Winkel von etwa 10° bis 20° schräg zu den beiden Nuten 31a, 31b auf den Kugelkopf 16a aufgesetzt wird. Die Gegen-Formschlusskontur 60 gleitet beim Aufsetzen der Kugelaufnahme 52a auf den Kugelkopf 16a an einer der Einführschrägen 35 entlang, die sich vom erweiterten Einführabschnitt 34 in Richtung der engeren Nuten 31a, 31b erstrecken.

Die beiden Nuten 31a, 31b erstrecken sich an einander entgegengesetzten Vertikalseitenflächen des Kugelkopfes 16a, so dass der Mitnehmer-Stift 61 sowohl in die eine als auch in die andere Nut 31a, 31b einführbar ist.

Die drehfeste Kupplung der Anhänger-Kupplung 50a mit dem Kugelkopf 16a ist vorteilhaft in Zusammenwirkung mit einer Sensoreinrichtung 40a, die einen Drehwinkelsensor 41 enthält. Der Drehwinkelsensor 41 ist unterhalb eines Drehwinkelgebers 42 angeordnet, beispielsweise eines Permanentmagneten 43. Der Permanentmagnet 43 ist einer liegenden Position angeordnet, so dass sein Magnetfeld im Wesentlichen horizontal verläuft und den unter dem Permanentmagneten 43 liegenden Drehwinkelsensor 41, der in einer zur Hochachse 25 horizontalen Ebene winkelsensitiv ist, durchdringt.

Die Sensoreinrichtung 40a umfasst zur Auswertung von Messsignalen des Drehwinkelsensors 41 eine Auswerte- und Steuereinrichtung 44a. Die Steuereinrichtung 44a enthält eine Kommunikationsschnittstelle 45, beispielsweise einen CAN-Controller, zur Anbindung an ein Kommunikationsnetz 46 des Zugfahrzeugs 12. Somit kann die Steuereinrichtung 44a beispielsweise mit einer Fahrstabilisierungseinrichtung 47 des Zugfahrzeugs 12 und/oder mit Rädern 49 zugeordneten Drehzahlsensoren 48 des Zugfahrzeugs 12 kommunizieren. Beispielsweise überträgt die Steuereinrichtung 44a eine den Drehwinkel des Anhängers 51 bezüglich der Hochachse 25 enthaltendes Drehwinkelsignal 37 an die Fahrstabilisierungseinrichtung 47.

Im ungekehrter Richtung erhält die Steuereinrichtung 44a von der Fahrstabilisierungseinrichtung 47 oder den Drehzahlsensoren 48 Fahrinformationen 38 über einen Fahrzustand des Zugfahrzeugs 12, beispielsweise Geradeausfahrt oder Kurvenfahrt, um beispielsweise eine Basis-Drehwinkellage des Drehwinkelgebers 42 bezüglich des Drehwinkelsensors 41 zu ermitteln. An sich ist diese Maßnahme bei der erfindungsgemäßen Anhängekupplung 11a nicht notwendig, da durch die Formschlusskonturen 30 eine definierte Drehwinkellage des Drehwinkelgebers 42 bezüglich des Drehwinkelsensors 41 möglich ist.

Die Fahrinformationen 38 sind bei der Steuereinrichtung 44a auch zu einem anderen Zweck nutzbar, insbesondere im Zusammenhang mit den Drehwinkelsignalen 37:
Die Steuereinrichtung 44a steuert Bremseinrichtungen 65, 66 an, die eine Drehbewegung des Kugelkopfs 16a bzw. des Kugelträgers 15a um die Hochachse 25 bremsen können.
Die Bremseinrichtung 65 ist beispielsweise eine piezo-elektrische Bremseinrichtung, die auf das Kugellager 23 oder eine sonstige Stelle des Drehlagers 17a wirkt. Die Bremseinrichtung 66 ist eine elektromechanische Bremseinrichtung mit einem beispielsweise zum Kugelträger 15a hin beweglichen und diesen bremsenden Bremsglied 67. Das Bremsglied 67 ist beispielsweise durch einen Elektromagneten, einen Elektromotor oder dergleichen zwischen einer vom Kugelträger 15a entfernten und einer an diesen angelegten Stellung verstellbar, was durch einen Doppelpfeil in Figur 2 angedeutet ist.
Die Steuereinrichtung 44a steuert eine jeweilige Bremskraft der Bremseinrichtungen 65, 66, beispielsweise in Abhängigkeit von dem Drehwinkelsignal 37 und/oder in Anhängigkeit von den Fahrinformationen 38. So steuert die Steuereinrichtung 44a beispielsweise eine höhere Bremskraft an, wenn die Drehzahlsensoren 48 eine Rückwärtsfahrt oder eine langsame Vorwärtsfahrt des Zugfahrzeugs 12 signalisieren.

Selbstverständlich ist es denkbar, dass die Fahrstabilisierungseinrichtung 47 die Bremseinrichtungen 65, 66 auch direkt ansteuert, wofür diese, was nicht dargestellt ist, mit einer entsprechenden Kommunikationsschnittstelle für das Kommunikationsnetz 46 ausgerüstet sein sollten.

Es ist auch möglich, dass die Fahrstabilisierungseinrichtung 47 die Bremseinrichtungen 65, 66 über die Steuereinrichtung 44a zu einer Erhöhung oder Verringerung der jeweiligen Bremskraft ansteuert.

Der Drehwinkelgeber 42 ist oberhalb des Drehwinkelsensors 41 angeordnet. Der Drehwinkelgeber 42 ist an der unteren Stirnseite des Kugelträgers 15a angeordnet.

Der Drehwinkelgeber 42 und der Drehwinkelsensor 41 sind durch ein Schutzgehäuse 70 geschützt. Ein oberes Gehäuseteil 71 des Schutzgehäuses 70 ist an der Unterseite des Kupplungsarms 14 angeordnet. Mittels ineinander greifenden Dichtungsvorsprüngen oder Hakenvorsprüngen 73 ist ein unteres Gehäuseteil 72 mit dem oberen Gehäuseteil 71 dicht verbunden. Ein Gehäuseboden 74, der mit dem unteren Gehäuseteil 72 einstückig sein kann, vorliegend aber ein separates Bauteil bildet, trägt den Drehwinkelsensor 41. Der Gehäuseboden 74 ist mittels eines Trägers 75 am Kupplungsarm 14a befestigt. Jedenfalls ist es vorteilhaft, wenn die Bestandteile der Sensoreinrichtung 40a vor Umwelteinflüssen geschützt an der Anhängekupplung 11 angeordnet sind.

Es versteht sich, dass die Anhängekupplung 11a teilweise schematisch dargestellt ist. Insbesondere kann das Schutzgehäuse 70 anders, vorzugsweise einfacher aufgebaut sein.

Der Drehwinkelsensor 41 und der Drehwinkelgeber 42 bei der Anhängekupplung 11a sind nahe beieinander angeordnet, vorliegend unmittelbar einander gegenüberliegend.

Es versteht sich, dass bei dem erfindungsgemäßen Lagerkonzept für die Baueinheit von Kugelträger und Kugelkopf auch eine alternative Anbringung zumindest für den Drehwinkelgeber, beispielsweise den Permanentmagneten möglich ist. So wäre es beispielsweise denkbar, an der Anhänger-Kupplung 50a einen Drehwinkelgeber oder Permanentmagneten 42' anzuordnen, beispielsweise am Gehäuse 53a. Durch die erfindungsgemäße Formschluss-Drehmitnahme mittels der Formschlusskonturen 30, 60 dreht der Drehwinkelgeber 42' bei Kurvenfahrt des Gespanns aus Zugfahrzeug 12 und Anhänger 51 relativ zu dem Drehwinkelsensor 41, so dass dieser eine Drehwinkellage bezüglich der Hochachse 25 erfassen kann.

Eine Anhängekupplung 11b hat einen Kupplungsarm 14b mit einem Steckende 80, das in eine Steckaufnahme 82 einer fahrzeugfest am Zugfahrzeug 12 angeordneten, beispielsweise am Querträger 13 befestigten Halterung 81 einsteckbar ist und mittels nicht dargestellter Formschlusskonturen an der Steckaufnahme 82 verriegelbar ist. Somit ist der Kupplungsarm 14b von der Halterung 81 bei Nichtgebrauch entfernbar. Am oberen, freien Ende des Kupplungsarms 14b ist eine Drehlagerung 17b für einen Kugelträger 15b vorgesehen, an dem ein Kugelkopf 16b angeordnet ist. Somit ist der Kugelkopf 16b drehbar bezüglich der Hochachse 25. Der Kugelkopf 16b steht nach oben vor den Kupplungsarm 14b vor.

Im Kugelkopf 16b und am freien Ende des Kupplungsarms 14b sind Ausnehmungen 83, 84 vorgesehen, in denen ein Drehwinkelgeber 42 und ein Drehwinkelsensor 41 aufgenommen sind. Der Drehwinkelgeber 42 ist oberhalb des Drehwinkelsensors 41 angeordnet, so dass der Drehwinkelsensor 41 vom Magnetfeld des Drehwinkelgebers 42 durchdrungen ist. Der Drehwinkelsensor 41 bildet einen Bestandteil einer Sensoreinrichtung 40b, die eine Drehung des Kugelkopf 16b bezüglich des Kupplungsarms 14b um die Hochachse 25 ermittelt und an ein Bordnetz 86 des Zugfahrzeugs 12 meldet. Beispielsweise ist die Sensoreinrichtung 40b über eine Leitung 85, die zu einer Anhänge-Steckdose 87 zur Stromversorgung des in Figur 4 nicht dargestellten Anhängers verbunden, die ihrerseits an das Bordnetz 86 angeschlossen ist. Die Steckdose 87 enthält Steckkontakte zum Einstekken eines anhängerseitigen Steckers.

Dem Drehlager 17b ist eine Bremseinrichtung 68 zugeordnet, beispielsweise eine piezo-elektrische Bremseinrichtung, die eine Drehung des Kugelkopf 16b um die Hochachse 25 in Abhängigkeit von einem Stellsignal bremst.

Die Sensoreinrichtung 40b enthält die Bremseinrichtung 68 vorzugsweise integral. Somit bildet die Sensoreinrichtung 40b eine integrierte Steuereinrichtung 44b für die Bremseinrichtung 68. Abhängig beispielsweise von einer Drehwinkeländerungsgeschwindigkeit eines Drehwinkels, den der Drehwinkelsensor 41 erfasst, vergrößert oder verkleinert die Steuereinrichtung 44b die Bremskraft der Bremseinrichtung 68, wobei sie beispielsweise bei schnellen Drehwinkeländerungen eine höhere Bremskraft zur Gespannstabilisierung einstellt. Beim Rangieren treten zwar größere Drehwinkel auf, dies aber mit geringerer Drehwinkeländerungsgeschwindigkeit. Somit stellt die Steuereinrichtung 44b eine kleinere Bremskraft an der Bremseinrichtung 68 ein.

Die beiden Ausnehmungen 83, 84 fluchten miteinander. Die untere Ausnehmung 84 bildet einen Kanal, aus dem die Anschlussleitung 85 herausgeführt ist. Beim Ausführungsbeispiel verlaufen die beiden Ausnehmungen 83, 84 im Wesentlichen vertikal. Die Leitung 85 tritt unterhalb des Kugelkopfes 16b aus dem Kupplungsarm 14b nach unten aus.

Es versteht sich, dass eine alternative Kabelführung ebenfalls denkbar ist. So könnte beispielsweise ein entlang einem Halsabschnitt 89 verlaufender, in Richtung des Zugfahrzeugs 12 führender Kanal 90 vorgesehen sein, so dass der Kabelaustritt für die Leitung 85 näher beim Zugfahrzeug ist.

Bei der Anhängekupplung 11b könnte alternativ auch beispielsweise vorgesehen sein, dass der Drehwinkelgeber 42 nicht im Kugelkopf 16b angeordnet ist, sondern in einer Anhänger-Kupplung 50b. In einem Gehäuse 53b der Anhänger-Kupplung 50b, die einen Kugelaufnahme 52b zur Ankupplung an den Kugelkopf 16b bereitstellt, ist beispielsweise oberseitig ein Drehwinkelgeber 42', z.B. ein Permanentmagnet, angeordnet.

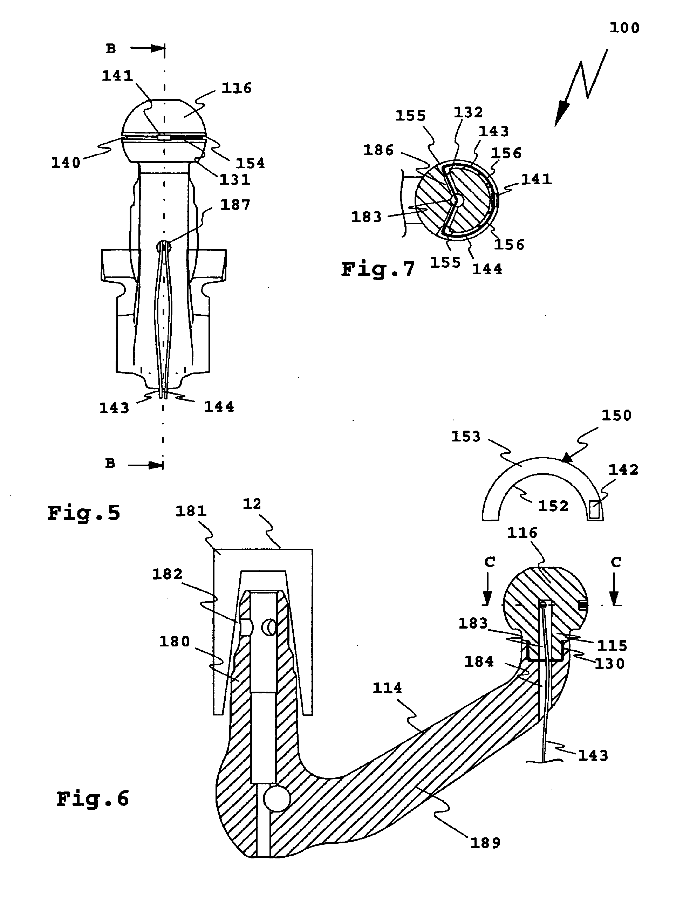

Ein Kupplungsarm 114 einer Anhängekupplung 100 gemäß Figur 5 hat ein Steckende 180 zum Einstecken in eine an einem Zugfahrzeug befestigte, beispielsweise an einem Querträger angeschweißte oder angeschraubte, Halterung 181. Die Halterung 181 weist eine nach unten offene Steckaufnahme 182 zur Aufnahme des Steckendes 180 auf. Das Steckende 180 kann mit nicht dargestellten Formschlusselementen, z.B. Kugeln, Bolzen oder dergleichen, in der Steckaufnahme 182 formschlüssig festgelegt werden.

Von dem Steckende 180 weg erstreckt sich ein Halsabschnitt 189 des Kupplungsarms 114, dessen vorderes, freies Ende nach oben gebogen ist. An diesem freien Ende ist eine Aufnahme 130 für einen Kugelträger 115 angeordnet, der fest mit einem Kugelkopf 116 der Anhängekupplung 100 verbunden, zweckmäßigerweise einstückig ist. Ein unterer Abschnitt des Kugelträgers 115 weist beispielsweise ein Außengewinde auf, das in ein Innengewinde an der Aufnahme 130 angeschraubt ist. Es versteht sich, dass auch eine Schweißverbindung zwischen dem Kugelträger 115 und dem Kupplungsarm 114 prinzipiell möglich ist. Vorzugsweise besteht der Kugelkopf 116 aus einem nichtmagnetischen Material, beispielsweise Aluminium, während der Kupplungsarm 114 durchaus auch aus magnetischen Material, beispielsweise Stahl, bestehen kann. Allerdings ist es prinzipiell auch denkbar, dass der selbst der Kugelkopf 116 aus magnetischem Material ist.

Am Kugelkopf 116 ist eine Sensoreinrichtung 140 angeordnet, die mit einem Drehwinkelgeber 142 an einer Kugelaufnahme 152 einer Anhänger-Kupplung 150 zusammenwirkt.

Die Sensoreinrichtung 140 umfasst einen Drehwinkelsensor 141, der an einer vom Zugfahrzeug 12 abgewandten Seite des Kugelkopfs 116 angeordnet ist.

Zur Halterung des Drehwinkelsensors 141 ist ein innovatives Konzept vorgesehen. Der Drehwinkelsensor 141 ist in einer Haltespange 154 aufgenommen, die in eine Nut 131 am Außenumfang des Kugelkopfs 116 eingesetzt ist. Die Haltespange 154 besteht vorteilhaft aus Kunststoff und schützt den Drehwinkelsensor 141.

Die Nut 131 erstreckt sich über mehr als die Hälfte des Außenumfangs des Kugelkopf 116 und ist so tief, dass die Haltespange 154 und jedenfalls der Drehwinkelsensor 151 im in die Nut 131 eingebauten Zustand nicht vor eine Außenoberfläche des Kugelkopfs 116 vorsehen. Somit ist der Drehwinkelsensor 141 geschützt. Vorzugsweise besteht die Haltestange 154 aus einem Kunststoffmaterial, das den Drehwinkelsensor 141, beispielsweise einen AMR oder GMR Sensor, vor Umwelteinflüssen schützt.

An den jeweiligen freien Enden der Haltespange 154 sind Rastvorsprünge 155 vorgesehen, die in korrespondierende Rastaufnahmen 132 an den beiden Längsendbereichen der Nut 131 eingreifen. Dadurch ist ein sicherer Halt der Haltespange 154 in der Nut 131 gewährleistet.

Ein Verkleben der Haltespange 154 in der Nut 131 ist vorteilhaft.

Der Drehwinkelsensor 141 ist mittels Anschlussleitungen 143, 144 an ein nicht weiter dargestelltes Bordnetz des Zugfahrzeugs anschließbar. Die Anschlussleitungen 143, 144 verlaufen in Spangenarmen 156 der Haltespange 154 bis zu den Rastvorsprüngen 155 an deren Enden und sind dann durch Radialkanäle 168 des Kugelkopf 116 nach radial innen bis zu einem Kanal 183 geführt. Der Kanal 183 führt etwa im Zentrum des Kugelkopf 160 in Richtung des Kupplungsarms 114 und erstreckt sich auch durch den Kugelträger 115 hindurch.

Der Kanal 183 fluchtet ferner mit einem Kanal 184 im Kupplungsarm 114. Die beiden Anschlussleitungen 143, 144 treten an einer Austrittsöffnung 187 aus dem Kupplungsarm 114 aus und können von dort beispielsweise mit einer Anhängesteckdose oder dergleichen verbunden werden. Auch an unmittelbarer Anschluss an das Bordnetz des Zugfahrzeugs ist möglich.

## Patentansprüche

1. Anhängekupplung für ein Zugfahrzeug (12), insbesondere ein Personen-Kraftfahrzeug, zum Anhängen eines Anhängers (51) an das Zugfahrzeug (12), mit einem Kugelkopf, der an einem freien Ende eines Kugelträgers (15a; 15b) angeordnet ist und auf die eine Kupplungsaufnahme (52a) einer Anhänger-Kupplung (50a; 50b) des Anhängers (51) aufsetzbar ist, und mit einem Drehlager (17a) zur drehbaren Lagerung des Kugelkopfs (16a; 16b) bezüglich des Zugfahrzeugs (12), **dadurch gekennzeichnet, dass** sie eine Bremseinrichtung (65, 66; 68) zum Bremsen einer Drehung des Kugelkopfs (16a; 16b) bezüglich des Zugfahrzeugs (12) aufweist.

2. Anhängekupplung nach Anspruch 1 oder nach dessen Oberbegriff, **dadurch gekennzeichnet, dass** der Kugelkopf mit dem Kugelträger (15a; 15b) fest verbunden ist, und dass der Kugelträger (15a; 15b) an einem mit dem Zugfahrzeug (12) fest verbindbaren oder verbundenen Kupplungsarm (14a; 14b) anhand des Drehlagers (17a) um eine Hochachse (25) drehbar gelagert ist.

3. Anhängekupplung nach Anspruch 1 oder 2 oder dem Oberbegriff des Anspruchs 1, **dadurch gekennzeichnet, dass** sie eine Sensoreinrichtung (40a, 40b) zur Erfassung einer Drehwinkellage des Anhängers (51) bezüglich des Zugfahrzeugs (12) aufweist, und dass die Sensoreinrichtung (40a, 40b) einen fahrzeugfest angeordneten Drehwinkelsensor (41) zur Zusammenwirkung mit einem bezüglich des Kugelkopfs (16a; 16b) drehfesten Drehwinkelgeber (42), insbesondere einen Permanentmagneten (43) umfasst.

4. Anhängekupplung nach Anspruch 3, **dadurch gekennzeichnet, dass** der Drehwinkelgeber (42) an dem Kugelkopf (16a; 16b) oder dem Kugelträger (15a; 15b) angeordnet ist und/oder dass der Drehwinkelsensor (41) mindestens einen Magnet-Sensor, insbesondere einen magnetoresistiven Sensor umfasst und der Drehwinkelgeber (42) mindestens einen Permanentmagneten (43) umfasst und/oder dass der Drehwinkelsensor (41) an dem den Kugelkopf (16a; 16b) haltenden Kupplungsarm (14a; 14b) angeordnet ist und/oder dass der Drehwinkelgeber (42) an dem Kugelträger (15a; 15b) oberhalb des Drehwinkelsensors (41) angeordnet ist und/oder dass der Drehwinkelgeber (42) und/oder der Drehwinkelsensor (41) vor Umwelteinflüssen, insbesondere durch ein Gehäuse und/oder durch Schutzaufnahmen an dem Kugelträger (15a; 15b) und/oder an dem Kupplungsarm (14a; 14b) oder an dem Kugelkopf (16a; 16b), geschützt sind und/oder dass die Sensoreinrichtung (40a, 40b) eine Kommunikationsschnittstelle (45) für ein Kommunikationsnetz (46) des Zugfahrzeugs (12) aufweist und/oder dass die Sensoreinrichtung (40a, 40b) zur Ermittlung einer Basiswinkellage des Kugelkopfs (16a; 16b) oder der Anhänger-Kupplung (50a; 50b) relativ zu dem Kupplungsarm (14a; 14b) Fahrinformationen über einen Fahrzustand, insbesondere über eine Fahrtrichtung, des Zugfahrzeugs (12) auf dem Kommunikationsnetz (46) empfängt und auswertet und/oder dass die Sensoreinrichtung (40a, 40b) zu einer Kommunikation mit einer elektronischen Fahrstabilisierungseinrichtung (47) des Zugfahrzeugs (12) ausgestaltet ist.

5. Anhängekupplung nach einem der vorhergehenden Ansprüche, **dadurch gekennzeichnet, dass** die Bremseinrichtung (65, 66; 68) eine Reibbremse und/oder eine piezo-elektrische Bremseinrichtung (65, 66; 68) umfasst und/oder dass die Bremseinrichtung (65, 66; 68) auf den Kugelkopf (16a; 16b) und/oder den Kugelträger (15a; 15b) und/oder das Drehlager wirkt und/oder dass eine Bremskraft der Bremseinrichtung (65, 66; 68) einstellbar ist.

6. Anhängekupplung nach einem der vorhergehenden Ansprüche, **dadurch gekennzeichnet, dass** sie eine Steuereinrichtung (44a; 44b) zu einer Veränderung der Bremskraft der Bremseinrichtung (65, 66; 68) in Abhängigkeit von einer Fahrtrichtung und/oder einer Fahrgeschwindigkeit des Zugfahrzeugs (12) und/oder einer Drehwinkelgeschwindigkeit eines Drehwinkels des Anhängers (51) relativ zu dem Zugfahrzeug (12) aufweist.

7. Anhängekupplung nach Anspruch 6, **dadurch gekennzeichnet, dass** die Steuereinrichtung (44a; 44b) eine Kommunikationsschnittstelle (45) für ein Kommunikationsnetz (46) des Zugfahrzeugs (12) aufweist und/oder dass die Steuereinrichtung (44a; 44b) ein Bestandteil der Sensoreinrichtung (40a, 40b) oder der Bremseinrichtung (65, 66; 68) ist oder durch die Sensoreinrichtung (40a, 40b) oder die Bremseinrichtung (65, 66; 68) gebildet ist.

8. Anhängekupplung nach einem der Ansprüche 3 bis 7, **dadurch gekennzeichnet, dass** die Sensoreinrichtung (40a, 40b) und die Bremseinrichtung (65, 66; 68) eine Baueinheit bilden.

9. Anhängekupplung nach einem der vorhergehenden Ansprüche, **dadurch gekennzeichnet, dass** an dem Kugelkopf (16a; 16b) oder dem Kugelträger (15a; 15b) mindestens eine Formschlusskontur (30) zu einer drehfesten Zusammenwirkung bezüglich einer Hochachse (25) mit einer Gegen-Formschlusskontur (60) der Anhänger-Kupplung (50a; 50b) angeordnet ist, so dass eine Drehbewegung des Anhängers (51) auf den Kugelkopf (16a; 16b) oder den Kugelträger (15a; 15b) übertragbar ist.

10. Anhängekupplung nach Anspruch 9, **dadurch gekennzeichnet, dass** die mindestens eine Formschlusskontur (30) mindestens eine Aufnahme, insbesondere eine Nut (31a, 31b), umfasst und/oder dass die mindestens eine Formschlusskontur (30), insbesondere die Aufnahme, mindestens eine Einführschräge (35) zum Einführen der Gegen-Formschlusskontur (60) beim Ankuppeln des Anhängers (51) aufweist und/oder dass die mindestens eine Formschlusskontur (30) eine Drehbewegung des Anhängers (51) bezüglich des Kugelkopfs (16a; 16b) quer zu einer Horizontalebene zulässt und/oder dass die mindestens eine Formschlusskontur (30) an einer vertikalen Seitenfläche des Kugelkopfs (16a; 16b) angeordnet ist.

11. Anhängekupplung nach Anspruch 9 oder 10, **dadurch gekennzeichnet, dass** die mindestens eine Formschlusskontur (30) einen im wesentlichen vertikalen Verlauf aufweist.

12. Anhängekupplung nach einem der Ansprüche 9 bis 11, **dadurch gekennzeichnet, dass** die mindestens eine Formschlusskontur (30) zwei zueinander bezüglich der Hochachse (25) zueinander drehwinkelversetzte, insbesondere an einander entgegengesetzten Vertikalseiten des Kugelkopfs (16a; 16b) angeordnete, Formschlusskonturen (30) aufweist.

13. Anhängekupplung nach einem der vorhergehenden Ansprüche, **dadurch gekennzeichnet, dass** der Kupplungsarm (14a; 14b) aus einem vorzugsweise gebogenen Flachmaterial besteht.

14. Anhängekupplung nach einem der vorhergehenden Ansprüche, **dadurch gekennzeichnet, dass** der Kupplungsarm (14a; 14b) beweglich am Zugfahrzeug (12) gelagert und/oder am Zugfahrzeug (12) lösbar befestigbar ist.

15. Anhänger-Kupplung (50a; 50b) für einen Anhänger (51) zum Ankuppeln an eine Anhängekupplung nach einem der vorhergehenden Ansprüche, **dadurch gekennzeichnet, dass** sie eine Gegen-Formschlusskontur (60) zum Ineingriff-Bringen mit einer an dem Kugelkopf (16a; 16b) oder dem Kugelträger (15a; 15b) angeordneten Formschlusskontur (30) zu einer drehfesten Zusammenwirkung bezüglich einer Hochachse (25) mit dem Kugelkopf (16a; 16b) aufweist, so dass eine Drehbewegung des Anhängers (51) auf den Kugelkopf (16a; 16b) oder den Kugelträger (15a; 15b) übertragbar ist.

## Claims

1. Trailer coupling for a towing vehicle (12), in particular a passenger car, for attaching a trailer (51) to the towing vehicle (12), comprising a hitch ball which is located at a free end of a ball support (15a; 15b) and to which a coupling location (52a) of a trailer coupling (50a; 50b) of the trailer (51) can be fitted, and further comprising a pivot bearing (17a) for the rotatable mounting of the hitch ball (16a; 16b) with respect to the towing vehicle (12), **characterised in that** it comprises a braking device (65, 66; 68) for braking a rotation of the hitch ball (16a; 16b) with respect to the towing vehicle (12).

2. Trailer coupling according to claim 1 or to the preamble thereof, **characterised in that** the hitch ball is permanently connected to the ball support (15a; 15b), and **in that** the ball support (15a; 15b) is mounted on a coupling arm (14a; 14b) which can be or is permanently connected to the towing vehicle (12) and is rotatable about a vertical axis (25) by means of the pivot bearing (17a).

3. Trailer coupling according to claim 1 or 2 or to the preamble of claim 1, **characterised in that** it comprises a sensor device (40a, 40b) for the detection of a rotary angle position of the trailer (51) relative to the towing vehicle (12), and **in that** the sensor device (40a, 40b) comprises a rotary angle sensor (41), in particular a permanent magnet (43), fitted to the vehicle, which acts together with a rotary angle transmitter (42) which is non-rotatable with respect to the hitch ball (16a; 16b).

4. Trailer coupling according to claim 3, **characterised in that** the rotary angle transmitter (42) is located on the hitch ball (16a; 16b) and/or **in that** the rotary angle sensor (41) comprises at least one magnetic sensor, in particular a magnetoresistive sensor, and **in that** the rotary angle transmitter (42) comprises at least one permanent magnet (43), and/or **in that** the rotary angle sensor (41) is located on the coupling arm (14a; 14b) holding the hitch ball (16a; 16b), and/or **in that** the rotary angle transmitter (42) is located on the ball support (15a; 15b) above the rotary angle sensor (41), and/or **in that** the rotary angle transmitter (42) and/or the rotary angle sensor (41) is/are protected against environmental effects, in particular by a housing and/or by protective locations on the ball support (15a; 15b) and/or on the coupling arm (14a; 14b) or on the hitch ball (16a; 16b), and/or **in that** the sensor device (40a, 40b) comprises a communication interface (45) for a communication network (46) of the towing vehicle (12), and/or **in that** the sensor device (40a, 40b) receives and evaluates on the communication network (46) driving information about a driving state, in particular a direction of travel, of the towing vehicle (12) in order to determine a basic angular position of the hitch ball (16a; 16b) or of the trailer coupling (50a; 50b) relative to the coupling arm (14a; 14b), and/or **in that** the sensor device (40a, 40b) is configured for communication with an electronic driving stabiliser device (47) of the towing vehicle (12).

5. Trailer coupling according to any of the preceding claims, **characterised in that** the braking device (65, 66; 68) comprises a friction brake and/or a piezoelectric braking device (65, 66; 68), and/or **in that** the braking device (65, 66; 68) acts on the hitch ball (16a; 16b) and/or on the ball support (15a; 15b) and/or on the pivot bearing, and/or **in that** a braking force of the braking device (65, 66; 68) is adjustable.

6. Trailer coupling according to any of the preceding claims, **characterised in that** it comprises a control unit (44a; 44b) for changing the braking force of the braking device (65, 66; 68) in dependence on a direction of travel and/or a speed of the towing vehicle (12) and/or on a rotary angle speed of a rotary angle of the trailer (51).

7. Trailer coupling according to claim 6, **characterised in that** the control unit (44a; 44b) comprises a communication interface (45) for a communication network (46) of the towing vehicle (12), and/or **in that** the control unit (44a; 44b) is a part of the sensor device (40a, 40b) or of the braking device (65, 66; 68) or is represented by the sensor device (40a, 40b) or by the braking device (65, 66; 68).

8. Trailer coupling according to any of claims 3 to 7, **characterised in that** the sensor device (40a, 40b) and the braking device (65, 66; 68) form an assembly.

9. Trailer coupling according to any of the preceding claims, **characterised in that** the hitch ball (16a; 16b) or the ball support (15a; 15b) has at least one positive-locking contour (30) for non-rotatable interaction with respect to a vertical axis (25) with a mating positive-locking contour (60) of the trailer coupling (50a; 50b), so that a rotary motion of the trailer (51) can be transmitted to the hitch ball (16a; 16b) or to the ball support (15a; 15b).

10. Trailer coupling according to claim 9, **characterised in that** the at least one positive-locking contour (30) comprises at least one receptacle, in particular a groove (31 a, 31 b), and/or **in that** the at least one positive-locking contour (30), in particular the receptacle, has at least one insertion bevel (35) for the insertion of the mating positive-locking contour (60) while hitching the trailer (51), and/or **in that** the at least one positive-locking contour (30) permits a rotary movement of the trailer (51) with respect to the hitch ball (16a; 16b) perpendicular to a horizontal plane, and/or **in that** the at least one positive-locking contour (30) is provided on a vertical side face of the hitch ball (16a; 16b).

11. Trailer coupling according to claim 9 or 10, **characterised in that** the at least one positive-locking contour (30) has a substantially vertical orientation.

12. Trailer coupling according to any of claims 9 to 11, **characterised in that** the at least one positive-locking contour (30) comprises two positive-locking contours (30) having a mutual rotary angle offset with respect to the vertical axis (25), which are in particular located on opposite vertical sides of the hitch ball (16a; 16b).

13. Trailer coupling according to any of the preceding claims, **characterised in that** the coupling arm (14a; 14b) is made of a preferably bent flat material.

14. Trailer coupling according to any of the preceding claims, **characterised in that** the coupling arm (14a; 14b) is movably mounted on the towing vehicle (12) and/or releasably attached to the towing vehicle (12).

15. Trailer coupling (50a; 50b) for a trailer (51) for coupling to a trailer coupling according to any of the preceding claims, **characterised in that** it is provided with a mating positive-locking contour (60) for engagement with a positive-locking contour (30) provided on the hitch ball (16a; 16b) or on the ball support (15a; 15b) for a non-rotatable interaction with the hitch ball (16a; 16b) with respect to a vertical axis (25), so that a rotary motion of the trailer (51) can be transmitted to the hitch ball (16a; 16b) or to the ball support (15a; 15b).

## Revendications

1. Attelage pour un véhicule tracteur (12), notamment un véhicule particulier, pour l'attelage d'une remorque (51) au véhicule tracteur (12), comportant une tête sphérique qui est disposée sur une extrémité libre d'un support tête sphérique (15a ; 15b) et sur laquelle peut être posé un logement (52a) d'un attelage (50a ; 50b) de la remorque (51), et un coussinet de pivotement (17a) pour le logement rotatif de la tête sphérique (16a ; 16b) par rapport au véhicule tracteur (12), **caractérisé en ce qu'**il présente un dispositif de freinage (65, 66 ; 68) pour le freinage d'une rotation de la tête sphérique (16a ; 16b) par rapport au véhicule tracteur (12).

2. Attelage selon la revendication 1 ou selon son préambule, **caractérisé en ce que** la tête sphérique est fixement reliée au support tête sphérique (15a ; 15b) et **en ce que** le support tête sphérique (15a ; 15b) est logé de manière rotative sur un bras d'attelage (14a ; 14b) relié ou pouvant être relié fixement au véhicule tracteur (12) à l'aide du coussinet de pivotement (17a) autour d'un axe vertical (25).

3. Attelage selon la revendication 1 ou 2 ou le préambule de la revendication 1, **caractérisé en ce qu'**il présente un dispositif de détection (40a, 40b) pour la détection d'une position d'angle de rotation de la remorque (51) par rapport au véhicule tracteur (12), et **en ce que** le dispositif de détection (40a, 40b) comporte un capteur d'angle de rotation (41) fixé au véhicule pour la coopération avec un transmetteur d'angle de rotation (42) fixe en rotation par rapport à la tête sphérique (16a ; 16b), en particulier un aimant permanent (43).

4. Attelage selon la revendication 3, **caractérisé en ce que** le transmetteur d'angle de rotation (42) est disposé sur la tête sphérique (16a ; 16b) ou le support tête sphérique (15a ; 15b) et/ou **en ce que** le capteur d'angle de rotation (41) comporte au moins un capteur magnétique, en particulier un capteur magnétorésistif et le transmetteur d'angle de rotation (42) comporte au moins un aimant permanent (43) et/ou **en ce que** le capteur d'angle de rotation (41) est disposé sur le bras d'attelage (14a ; 14b) retenant la tête sphérique (16a ; 16b) et/ou **en ce que** le transmetteur d'angle de rotation (42) est disposé sur le support sphérique (15a ; 15b) au-dessus du capteur d'angle de rotation (41) et/ou **en ce que** le transmetteur d'angle de rotation (42) et/ou le capteur d'angle de rotation (41) sont protégés des influences environnementales, en particulier par un boîtier et/ou par des logements de protection sur le support sphérique (15a ; 15b) et/ou sur le bras d'attelage (14a ; 14b) ou sur la tête sphérique (16a ; 16b) et/ou **en ce que** le dispositif de détection (40a ; 40b) présente une interface de communication (45) pour un réseau de communication (46) du véhicule tracteur (12) et/ou **en ce que** le dispositif de détection (40a, 40b) reçoit et évalue pour la détermination d'une position d'angle de base de la tête sphérique (16a ; 16b) ou de l'attelage (50a ; 50b) par rapport au bras d'attelage (14 ; 14b) des informations de roulement sur un état de roulement, en particulier sur un sens de la marche du véhicule tracteur (12) sur le réseau de communication (46) et/ou **en ce que** le dispositif de détection (40a, 40b) est configuré pour établir une communication avec un dispositif de stabilisation de roulement électronique (47) du véhicule tracteur (12).

5. Attelage selon l'une quelconque des revendications précédentes, **caractérisé en ce que** le dispositif de freinage (65, 66 ; 68) comporte un frein à friction et/ou un dispositif de freinage piézoélectrique (65, 66 ; 68) et/ou **en ce que** le dispositif de freinage (65, 66 ; 68) agit sur la tête sphérique (16a ; 16b) et/ou le support sphérique (15a ; 15b) et/ou le coussinet de pivotement et/ou **en ce qu'**une force de freinage du dispositif de freinage (65, 66 ; 68) peut être réglée.

6. Attelage selon l'une quelconque des revendications précédentes, **caractérisé en ce qu'**il présente un dispositif de commande (44a ; 44b) pour une modification de la force de freinage du dispositif de freinage (65, 66 ; 68) en fonction d'un sens de la marche et/ou d'une vitesse de roulement du véhicule tracteur (12) et/ou d'une vitesse d'un angle de rotation de la remorque (51) par rapport au véhicule tracteur (12).

7. Attelage selon la revendication 6, **caractérisé en ce que** le dispositif de commande (44a ; 44b) présente une interface de communication (45) pour un réseau de communication (46) du véhicule tracteur (12) et/ou **en ce que** le dispositif de commande (44a ; 44b) est un constituant du dispositif de détection (40a, 40b) ou du dispositif de freinage (65, 66 ; 68) ou est constitué du dispositif de détection (40a, 40b) ou du dispositif de freinage (65, 66 ; 68).

8. Attelage selon l'une quelconque des revendications 3 à 7, **caractérisé en ce que** le dispositif de détection (40a, 40b) et le dispositif de freinage (65, 66 ; 68) forment une unité de construction.

9. Attelage selon l'une quelconque des revendications précédentes, **caractérisé en ce qu'**au moins un contour positif (30) est disposé sur la tête sphérique (16a ; 16b) ou le support sphérique (15a ; 15b) pour une coopération fixe en rotation par rapport à un axe vertical (25) avec un contour positif antagoniste (60) de l'attelage (50a ; 50b) de sorte qu'un mouvement rotatif de la remorque (51) puisse être transmis à la tête sphérique (16 ; 16b) ou au support sphérique (15a ; 15b).

10. Attelage selon la revendication 9, **caractérisé en ce qu'**au moins un contour positif (30) comporte au moins un logement, en particulier une rainure (31a, 31b) et/ou **en ce qu'**au moins un contour positif (30), en particulier le logement, présente au moins un biais d'introduction (35) pour l'introduction du contour positif antagoniste (60) lors de l'attelage de la remorque (51) et/ou **en ce qu'**au moins un contour positif (30) autorise un mouvement rotatif de la remorque (51) par rapport à la tête sphérique (16a ; 16b) transversalement à un plan horizontal et/ou **en ce qu'**au moins un contour positif (30) est disposé sur une surface latérale verticale de la tête sphérique (16a ; 16b).

11. Attelage selon la revendication 9 ou 10, **caractérisé en ce qu'**au moins un contour positif (30) présente un tracé sensiblement vertical.

12. Attelage selon l'une quelconque des revendications 9 à 11, **caractérisé en ce qu'**au moins un contour positif (30) présente deux contours positifs (30) disposés en particulier sur des côtés verticaux de la tête sphérique (16a ; 16b) opposés l'un à l'autre, décalés en angle de rotation l'un par rapport à l'autre et par rapport à l'axe vertical (25).

13. Attelage selon l'une quelconque des revendications précédentes, **caractérisé en ce que** le bras d'attelage (14a ; 14b) se compose d'un matériau plat, plié de préférence.

14. Attelage selon l'une quelconque des revendications précédentes, **caractérisé en ce que** le bras d'attelage (14 ; 14b) est logé de manière mobile sur le véhicule tracteur (12) et/ou peut être fixé de manière détachable sur le véhicule tracteur (12).

15. Attelage (50a ; 50b) pour une remorque (51) destiné à être couplé à un attelage selon l'une quelconque des revendications précédentes, **caractérisé en ce qu'**il présente un contour positif antagoniste (60) pour venir en prise avec un contour positif (30) disposé sur la tête sphérique (16a ; 16b) ou le support sphérique (15a ; 15b) pour une coopération fixe en rotation par rapport à un axe vertical (25) avec la tête sphérique (16a ; 16b) de sorte qu'un mouvement rotatif de la remorque (51) puisse être transféré à la tête sphérique (16a ; 16b) ou au support sphérique (15a ; 15b).
